# EUROPÄISCHE PATENTSCHRIFT

(11) **EP 1 467 149 B1**
(45) Veröffentlichungstag und Bekanntmachung des Hinweises auf die Patenterteilung: **15.12.2010**
(21) Anmeldenummer: 04007876.8
(22) Anmeldetag: 01.04.2004
(51) Int. Cl.: F23N 1/00, F23N 5/00, F23N 5/02, F23D 14/00, F23K 5/00

(54) **Verfahren zu dem Überwachen der Verbrennung in einer Verbrennungseinrichtung**
Method for controlling the combustion in a combustion device
Méthode pour surveiller la combustion dans un dispositif de combustion

(30) Priorität: 11.04.2003 DE 10316994
(43) Veröffentlichungstag der Anmeldung: 13.10.2004
(73) Patentinhaber: E.ON Ruhrgas AG, 45131 Essen (DE)
(72) Erfinder: Schollmeyer, Hans-Jürgen, Dipl.-Ing., 46348 Raesfeld (DE)
(74) Vertreter: Harlacher, Mechthild

(56) Entgegenhaltungen:
- EP-A- 0 209 771
- EP-A- 0 334 779
- EP-A- 1 239 220
- EP-A- 1 331 444
- DE-A- 10 001 251
- DE-A- 19 611 110

## Beschreibung

Die Erfindung betrifft ein Verfahren zum Überwachen der Verbrennung in einer als Ottomotor ausgebildeten Verbrennungseinrichtung für Gas, insbesondere für Erdgas, wobei mittels einer ersten Sonde im Abgas das Gas-Luftverhältnis messtechnisch erfasst und mittels einer Steuereinheit in Abhängigkeit von einem Sollwert geregelt wird.

Die Erfindung kann bei stationären Gasverbrennungseinrichtungen beispielsweise in Blockheizkraftwerken oder zur industriellen Wärmeerzeugung eingesetzt werden. In gleicher Weise ist die Anwendung bei instationären Gasverbrennungseinrichtungen in Kraftfahrzeugen möglich.

Derartige Gasverbrennungseinrichtungen sind häufig mit Schadstoffminderungsanlagen z. B. in Form von 3-Wege-Katalysatoren ausgerüstet.

Das Erdgasversorgungsnetz verfügt über eine Vielzahl von Einspeisestellen an denen Erdgase aus unterschiedlichen Quellen mit unterschiedlichen Gasbeschaffenheiten und somit unterschiedlichen Brenneigenschaften eingeleitet werden können. Unter Gasbeschaffenheit wird die Gaszusammensetzung verstanden, von der u. a. der Brennwert und die Wobbezahl bzw. der Wobbeindex abhängig ist. So kann Erdgas je nach Quelle neben Methan auch Inertgase wie N₂ und CO₂ und verschiedene höhere Kohlenwasserstoffe enthalten.

Der Brennwert ist der Energiegehalt des Gases unter Berücksichtigung der Kondensationswärme. Der Wobbeindex ist der Quotient des volumenbezogenen Brennwertes und der Quadratwurzel aus der relativen Dichte des Gases. Der Wobbeindex wird in der Industrie zur Regelung bzw. Konstanthaltung der Energiemengenzufuhr zu Gasverbrauchseinrichtungen benutzt.

Unter dem Gesichtpunkt sparsamer und Umwelt-schonender Energienutzung, wird angestrebt, die Gasverbrennungseinrichtungen immer mit bestmöglichen Wirkungsgraden und niedrigsten Emissionen zu betreiben, auch wenn sich die Gasbeschaffenheit ändert.

Die EP 1 239 220 A2 offenbart ein Gasverbrennungsgerät, bei dem im Abgasstrang eine Lambda-Sonde angeordnet ist, um einen Lambda-Wert zu sensieren, der mit dem Sauerstoffgehalt des Abgases korreliert. Der Lambda-Sensor ist mit einem Regelsystem verbunden, das mit einem Stellglied gekoppelt ist. Dieses Regelsystem ermöglicht eine Lambda-geführte Regelung des Stellgliedes, um einen gewünschten Lambda-Sollwert einzuregeln. Folglich dient die Lambda-Regelung lediglich dazu, ein einmal eingestelltes Verhältnis von Gas und Luft beizubehalten.

Die DE 100 01 251 A1 beschreibt ein Verfahren zur Überwachung der Verbrennung in einer Verbrennungseinrichtung für Gas. Mit einem Grobsensor wird erfasst, wenn sich die Qualität bzw. die Beschaffenheit des zugeführten Brenngases ändert. Wenn die Änderung der Beschaffenheit eine vorgegebene Größe überschreitet, wird eine Lambda-Sonde aktiviert. Der Grobsensor und/oder die Lambda-Sonde steuern einen Aktor zur Korrektur des Gas-Luftverhältnisses.

Die EP 0334 779 A1 offenbart ein Verfahren und eine Vorrichtung zur Ermittlung der Beschaffenheit von Verbrennungsgasen, d. h. Abgasen mittels Detektoren mit einer halbleitenden Metallphtalocyanin-Schicht. Es wird ein Verfahren zum Überwachen der Verbrennung in einer als Ottomotor ausgebildeten Verbrennungseinrichtung für Gas beschrieben. Mittels einer Sonde im Abgas wird das Gas-Luftverhältnis messtechnisch erfasst und mittels einer Steuereinheit in Abhängigkeit von einem Sollwert geregelt, indem die Steuereinheit ein Mittel zur Einstellung der Luftzufuhr oder alternativ die Brennstoffeinspritzpumpe steuert. Obwohl bei einem Gaswechsel das Gas-Luftverhältnis korrigiert wird, ist nicht gewährleistet, dass die Verbrennungseinrichtung optimal betrieben wird, weil der Gaswechsel zu Wirkungsgrad-Einbußen führen kann.

Bei Erdgasfahrzeugen ist ein optimales Betriebsverhalten (Verbrauch, Emissionen, Laufruhe usw.) nur gewährleistet, wenn der Zündzeitpunkt und das Gas-Luftverhältnis an die aktuelle Gasbeschaffenheit angepasst wird.

Bei Gasverbrennungseinrichtungen, die zur industriellen Wärmeerzeugung eingesetzt werden, ist es häufig aus produktionstechnischen Gründen erforderlich, die Gasverbrennungseinrichtung unabhängig von der im Versorgungsnetz zur Verfügung stehenden Gasbeschaffenheit mit exakt gleicher Einstellung des Brennstoff/Luft-Verhältnisses oder der Wärmebelastung zu betreiben, zum Beispiel bei der Beheizung von Glaswannen, der Erzeugung von Schutzgas oder dem Einsatz einer Flamme als Werkzeug. Wenn dies nicht gewährleistet ist, kann es zu erheblichen Produktionsausfällen kommen.

Geeignete Kenngrößen für die Gasbeschaffenheitserkennung sind die Brenngeschwindigkeit, der Luftbedarf oder der Brennwert des Brenngases bzw. des Brenngas/Luft-Gemisches. Die Brenngeschwindigkeit und der Luftbedarf können nicht oder nur mit großem Aufwand direkt gemessen werden. Einfach aufgebaute und damit kostengünstige Brennwertmessgeräte sind zwar verfügbar, aber für viele Anwendungen, insbesondere für kleinere Blockheizkraftwerke oder Erdgas-Pkw noch zu teuer und in der Regel nicht hinreichend thermisch oder mechanisch belastbar.

Ferner wird es zukünftig aufgrund gesetzlicher Emissionsanforderungen erforderlich sein, die Funktion bestimmter Baugruppen von Gasverbrennungsanlagen, insbesondere die Schadstoffminderungsanlage zur Abgasnachbehandlung, kontinuierlich zu überwachen. Die Funktion einer Schadstoffminderungsanlage kann aus unterschiedlichen Gründen beeinträchtigt sein. Zu unterscheiden sind regelungs- oder alterungsbedingte Veränderungen wie Langzeitdrift, thermische oder mechanische Beschädigungen und Vergiftungen. Je nach Art der Störung kann es zu einem gleichzeitigen Anstieg der Stickoxide (NOx), des Kohlenmonoxids (CO) und der Kohlenwasserstoffe (CH) - oder nur zu einem Anstieg einzelner Komponenten kommen.

Zur Überwachung der Funktion der Bauelemente hinsichtlich gesetzlicher Emissionsanforderungen müssen Kraftfahrzeuge, mit sogenannten On-Board-Diagnose (OBD)-Systemen ausgerüstet werden. Die Überwachung auf Basis einer direkten Emissionsmessung würde den Einsatz einer teurer Messtechnik erfordern. Hinzu kommt, dass bei Erdgasfahrzeugen die Realisierung eines entsprechenden Systems aufgrund der möglichen Gasbeschaffenheitsänderungen, nur möglich ist, wenn eine zuverlässige Gasbeschaffenheitserkennung gewährleistet ist. Folglich werden derartige On-Board-Diagnose (OBD)-Systeme relativ aufwendig, anspruchsvoll und dementsprechend kostenaufwendig sein.

Der Erfindung liegt die Aufgabe zugrunde, auf einfache Art eine optimale Verbrennung in einer Gasverbrennungseinrichtung hinsichtlich gesetzlicher Emissionsanforderungen und optimalem Wirkungsgrad bei wechselnden Gasbeschaffenheiten zu erreichen.

Die Aufgabe wird bei einem Verfahren der eingangs genannten Art durch die Merkmale des Anspruches 1 gelöst.

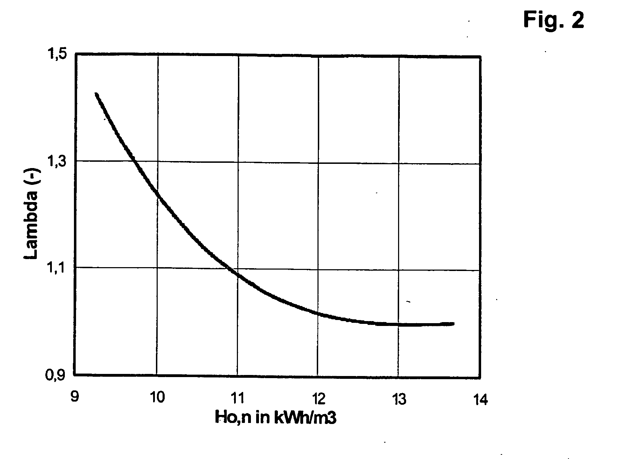

Die Erfindung beruht auf der Erkenntnis, dass eine Gasbeschaffenheitsänderung kostengünstig aus der einfachen messtechnischen Erfassung des Gas-Luftverhältnisses, vorzugsweise mittels Messungen des O₂ oder CO₂ Gehalt im Abgas, ermittelt werden kann. Ein Wechsel der Gasbeschaffenheit kann auf einfache Art und Weise sofort erkannt und ein Korrektursignal erzeugt werden. Dabei wird der Effekt genutzt, dass sich bei einem Wechsel der Gasbeschaffenheit das Gas-Luftverhältnis λ ändert, das zum Brennwert des Gases gemäß Fig. 2 korreliert.

Bei der Verbrennungseinrichtung in Form eines Gas-Ottomotors wird mit Hilfe des dem Brennwert oder der Wobbezahl analogen Korrektursignals in einer Steuereinheit eine Korrektur der in der Steuereinheit hinterlegten Zündzeitpunkt-Kennfelder durchgeführt.

Bei einem Gaswechsel wird das Korrektursignal aus der maximalen Signaländerung vor dem Eingriff der Regelung für das Gas-Luftverhältnis λ abgeleitet. Da sich das Gas-Lufiverhältnis λ bei einem Gaswechsel sehr schnell ändert, und zwar bevor eine eventuell vorhandene λ-Regelung korrigierend eingreifen kann, sind Störeinflüsse durch die λ-Regelung zu vernachlässigen. Mit Hilfe des Korrektursignals kann das Gas-Luftverhältnis besonders schnell an den Sollwert angepasst werden, wodurch erhöhte Emissionen, die während des Zeitraums der Anpassung entstehen, vermieden werden.

Bei Motoren, die überstöchiometrisch betrieben werden, d, h. bei Magermotoren ist es am zweckmäßigsten den O₂-Gehalt zu messen.

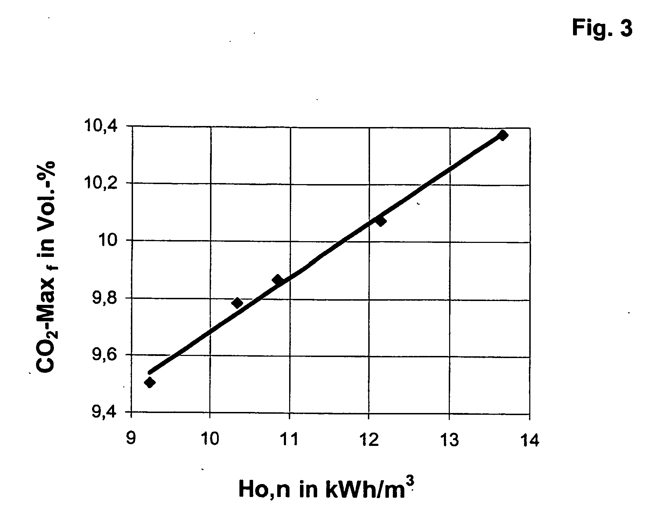

Bei Motoren, die stöchiometrisch betrieben werden, d. h. bei λ 1-Motoren ist es am vorteilhaftesten den CO₂-Gehalt zu messen, da bei einem λ unter 1 keine Sauerstoffmessung im Abgas möglich ist. Bei einem Gaswechsel wird ein Korrektursignal erzeugt und das Gas-Luftverhältnis mittels des Korrektursignals und ggf. mittels einer λ-Regelung wieder auf den ursprünglichen nahstöchimetrischen λ-Bereich geregelt, um möglichst günstige Randbedingungen zur Konvertierung der Schadstoffe durch den 3-Wege-Katalysator zu schaffen. Aufgrund der veränderten Gasbeschaffenheit ist der CO₂-Gehalt auch nach der λ Regelung noch verändert. Daher misst erfindungsgemäß die erste Sonde zusätzlich den CO₂ₘₐₓ Gehalt im Abgas bei einem Gas-Luftverhältnis λ von im wesentlichen 1. Mittels des Messwertes wird in der Auswerteeinheit ein dem Brennwert oder der Wobbezahl analoges Korrektursignal mittels einer zweiten Korrelation gemäß Fig.3 erzeugt.

Das Messsignal wird nicht von Betriebsparametern beeinflusst, sondern ist ausschließlich von der Beschaffenheit des Gases abhängig.

Vorzugsweise wird das in der Auswerteeinheit erzeugte Korrektursignal einer Steuereinheit zugeführt und als Vorsteuersignal zur Verstellung des Gas- und/oder Luftvolumenstroms, üblicherweise des Gasvolumenstromes benutzt.

Nach einem vorzugsweisen Merkmal der Erfindung werden die Motordrehzahl, Belastung und Verbrennungslufttemperatur aus der Steuereinheit ausgelesen und der Auswerteeinheit zur Anpassung des Korrektursignals in Abhängigkeit von unterschiedlichen Betriebs- und Umgebungsbedingungen zugeführt.

Bei Verbrennungseinrichtungen mit einer Schadstoffminderungsanlage werden zur Emissionsüberwachung ebenfalls die Messwerte einer Sonde zur messtechnischen Erfassung des Gas-Luftverhältnisses, vorzugsweise O₂ oder CO-Messwerte, ausgewertet. Es kann sich um Verbrennungsanlagen für flüssige oder gasförmige Brennstoffe handeln. Die Messwerte der ersten Sonde werden mit Sollwerten, die in der Auswerteeinheit hinterlegt sind, verglichen. Weicht ein Messwert über einen vorgegebenen Zeitraum und über einen vorgegebenen Differenzbetrag vom Sollwert ab, liegt eine regelungsbedingte Störung der Schadstoffminderungsanlage vor und es wird ein Warn- oder Fehlersignal herausgegeben oder die Gasverbrennungseinrichtung abgeschaltet.

Im Rahmen der Erfindung können die Abgastemperaturen stromauf und stromab der Schadstoffminderungsanlage gemessen und in der Auswerteeinheit mit mindestens einem Sollwert verglichen werden. Wird ein vorgegebener Differenzbetrag zwischen Soll- und Messwert überschritten, wird ein Warnsignal herausgegeben oder die Gasverbrennungseinrichtung abgeschaltet.

Erfindungsgemäß ist es auch möglich die Differenz zwischen den beiden gemessenen Temperaturen auszuwerten. Die Differenz der beiden Messwerte wird mit einem vorgegebenen Sollwert über einen vorgegebenen Zeitraum verglichen. Wenn die Differenz der Messwerte über den vorgegebenen Zeitraum hinaus kleiner ist als der Sollwert ist dies ein Signal dafür, dass die Funktionsfähigkeit der Schadstoffminderungsanlage eingeschränkt ist. Es wird ein Warnsignal herausgegeben oder die Gasverbrennungseinrichtung abgeschaltet.

Nach einem weiteren Merkmal der Erfindung befindet sich im Abgasstrom stromab der Schadstoffminderungsanlage eine zweite Sonde zur messtechnischen Erfassung des Gas-Luftverhältnisses, vorzugsweise zur Messung des O₂ oder CO-Gehaltes. Wenn sich die Differenz der beiden λ-Werte, die sich aus den Messwerten ergeben, gegenüber einem vorgegebenen Sollwert verändert, ist dies ein Signal dafür, dass die erste Sonde beschädigt oder gealtert ist.

Weiterhin werden im Rahmen der Erfindung die Messwerte der ersten und der zweiten Sonde mit Referenzwerten in Abhängigkeit von Betriebsparametern wie Drehzahl, Drehmoment, Lufttemperatur oder dergl. verglichen. Verändern sich die Messwerte über einen vorgegebenen Zeitraum über einen vorgegebenen Sollwert hinaus, ist dies ein Signal für einen Defekt an der Regelung der Gasverbrennungseinrichtung.

Vorzugsweise misst eine NOₓ-Sonde den NO_{X}-Gehalt im Abgas stromab der Schadstoffminderungsanlage. Die Messwerte werden ebenfalls der Auswerteeinheit zugeführt und ausgewertet. Damit bestehen erweiterte Diagnosemöglichkeiten hinsichtlich der Ursache von Emissionsanstiegen.

Nachfolgend wird die Erfindung anhand eines bevorzugten Ausführungsbeispiels im Zusammenhang mit den beigefügten Zeichnungen näher erläutert.
Die Zeichnung zeigt in
Fig. 1 eine schematische Darstellung einer Verbrennungseinrichtung für Erdgas mit einer erfindungsgemäßen Überwachungseinrichtung;
Fig. 2 ein Diagramm, in dem Gas-Luftverhältnisse λ, die aus O₂ oder CO₂-Messwerten abgeleitet worden sind, in Abhängigkeit vom Brennwert dargestellt sind;
Fig. 3 ein Diagramm, in dem CO₂ₘₐₓ- Messwerte, die bei λ im wesentlichen gleich 1 gemessen werden, die Abhängigkeit vom Brennwert dargestellt sind;

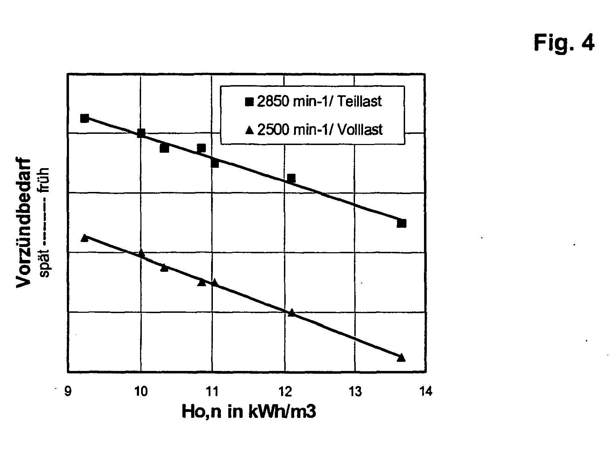

Fig. 4 ein Diagramm, in dem die Abhängigkeit des Vorzündbedarfs eines Erdgasmotors vom Brennwert dargestellt ist.

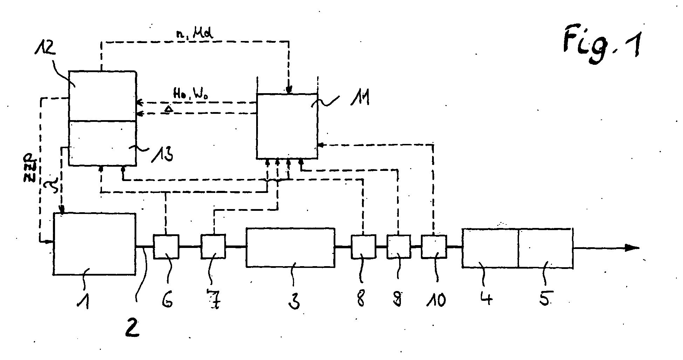

Die Abgase aus einer in Fig. 1 dargestellten Verbrennungseinrichtung 1, in Form eines Erdgasmotors der überstöchiometrisch betrieben wird, werden über eine Abgasleitung 2 einer Schadstoffminderungsanlage 3 in Form eines 3-Wege-Katalysators und einem Wärmetauscher 4 sowie einem Schalldämpfer 5 zugeführt, bevor sie ins Freie gelangen.

Stromauf der Schadstoffminderungsanlage 3 sind in der Abgasleitung 2 eine erste Sonde 6 zur Messung des O₂-Gehaltes und ein Temperatursensor 7 angeordnet. Stromab der Schadstoffminderungsanlage 3 sind im Abgasstrom eine zweite Sonde 8 zur Messung des O₂-Gehaltes, ein zweiter Temperatursensor 9 und ein NOx-Sensor 10 angeordnet. Die Signale der Sonden und Temperatursensoren werden einer elektronischen Auswerteeinheit 11 zugeführt.

Die erste Sonde 6 misst kontinuierlichen den Sauerstoffgehalt im Abgas. Die Messwerte werden einer Steuereinheit 12 zugeführt, welche das Gas-Luftverhältnis (λ) des Gas-Luftgemisches in Abhängigkeit von einem Sollwert regelt.

Zur Gasbeschaffenheitserkennung werden die Messwerte zusätzlich einer elektronischen Auswerteeinheit 11 zugeführt. Aus den Messsignalen, und zwar Spannungs-Signalen wird mittels der Korrelation gemäß Fig. 2 ein dem Brennwert -bzw. der Wobbezahl analoges Korrektursignal generiert. Das Korrektursignal wird der Steuereinheit 12 zugeführt. In der Steuereinheit 12 wird mit dem Korrektursignal das im Steuereinheit hinterlegte Zündzeitpunkt-Kennfeld korrigiert. Außerdem wird das Korrektursignal in der Steuereinheit als Vorsteuersignal zur Verstellung des Gas- oder Luftvolumenstroms verwendet. Alternativ könnten die Änderungen auch in der Auswerteeinheit 11 erfolgen. Die Vorsteuerung bewirkt, dass das Gas-Luftverhältnis nach einem Gaswechsel sehr schnell an den Sollwert angepasst wirkt. Dadurch werden erhöhte Emissionen, die im Zeitraum der Anpassung entstehen, vermieden.

Die erste Sonde 6 arbeitet in einem breiten Messbereich. In denjenigen Fällen, in denen für die Regelung des Gas-Luftverhältnisses eine Sonde mit engem Messbereich benutzt wird, insbesondere bei Motoren, die nahstöchiometrisch betreiben werden muss für die Messung zum Zweck der Erkennung von Änderungen der Gasbeschaffenheit eine gesonderte geeignete Sonde benutzt werden.

Um bei Bedarf den Einfluss unterschiedlicher Betriebs- und Umgebungsbedingungen wie Motordrehzahl, Belastung und Gasverbrennungslufttemperatur kompensieren zu können, werden diese Daten aus der Steuereinheit 12 ausgelesen und der Auswerteeinheit 11 zugeführt. Dort wird, falls erforderlich, das Korrektursignal angepasst.

Nachfolgend werden die wesentlichen Abläufe bei der Emissionsüberwachung beschrieben:

Bei einer regelungsbedingten Störung der Schadstoffminderungsanlage wird die Verbrennungseinrichtung nicht mehr im vorgesehenen Luftzahlbereich betrieben (beispielsweise bei einem 3-Wege-Katalysator außerhalb des sogenannten Lambda-Fensters). Je nachdem, ob es sich dabei um eine Veränderung in Richtung "fettes" oder "mageres" Gemisch handelt, steigt oder fällt der mit Hilfe der ersten Sonde 6 kontinuierlich gemessene O₂ -Wert.

Wenn die erste Sonde gealtert ist, wird die Verbrennungseinrichtung ebenfalls nicht mehr im vorgesehenen Luftzahlbereich betrieben und der gemessene O₂ --Wert verändert sich. Der aktuelle Messwert wird mit Sollwerten, die in der Auswerteelektronik 11 hinterlegt sind, abgeglichen. Weicht der Messwert über einen vorgegebenen zulässigen Zeitraum zu stark vom Sollwert ab, wird eine Fehlermeldung herausgegeben. Alternativ kann die Verbrennungseinrichtung abgeschaltet werden. Der zulässige Zeitraum für die Abweichung wird über die Auswerteeinheit hinterlegt.

Ein Emissionsanstieg kann auch die Folge einer alterungsbedingten Störung am Katalysatorkörper sein. Ist der Katalysatorkörper gealtert, verändert sich seine chemische Aktivität und damit die Abgastemperaturdifferenz über dem Katalysator gegenüber den Sollwerten. Die Abgastemperaturen werden mittels der Temperatursensoren 7, 9 gemessen und mit Sollwerten, die in der Auswerteelektronik 11 hinterlegt sind, verglichen. Bei zu großen Abweichungen erfolgt eine Warnung bzw. Abschaltung. Eine thermische oder mechanische Beschädigung bzw. Vergiftung des Katalysatorkörpers führt ebenfalls zu einer geringeren chemischen Aktivität und wird analog behandelt.

Mit Hilfe des NOₓ-Sensors 10 kann ein Anstieg der Stickoxid-Emissionen direkt erfasst werden. Ein NOₓ-Sensor ist dann erforderlich, wenn zusätzlich die Funktion von NOₓ-selektiven Schadstoffminderungsanlagen, z. B. von NOₓ-Speicherkatalysatoren überwacht werden soll, da dies nicht allein über die Auswertung der Temperaturen im Abgas sichergestellt ist.

Nachfolgend sind die wesentlichen Diagnosefunktionen näher erläutert:

Bei einem stöchiometrisch betriebenen Gasmotor mit 3-Wege-Katalysator können Emissionsanstiege durch Alterung, Beschädigung oder Vergiftung des 3-Wege-Katalysators, durch Beschädigung oder Alterung der O₂-Sonde, durch einen Regelungsfehler, durch eine Gasbeschaffenheitsänderung oder durch veränderte Motorbetriebsparameter verursacht werden.

Dem Emissionsanstieg liegt eine Veränderung am 3-Wege-Katalysator zu Grunde, wenn die Differenz zwischen den Messwerten der Temperatursensoren 7, 9 die stromauf und stromab der Schadstoffminderungsanlage 3 installiert sind, über einen längeren Zeitraum bei Referenzbetriebsparametern (Drehzahl, Drehmoment, Luftansaugtemperatur usw.) kleiner ist als in der Auswerteeinheit abgelegte Sollwerte. Anhand des zeitlichen Verlaufs der Temperaturänderung lässt sich feststellen, ob es sich um einen "normalen" Alterungsprozess oder um eine akute Beschädigung handelt.

Wenn die Ausgangssignale der ersten und der zweiten O₂-Sonden 6, 8 die stromauf und stromab der Schadstoffminderungsanlage 3 installiert sind, stark voneinander abweichen, ist eine Sonde beschädigt bzw. gealtert.

Verändern sich die Messwerte dagegen gleichermaßen über einen längeren Zeitraum gegenüber Referenzwerten bei bestimmten Betriebsparametern (Drehzahl, Drehmoment, Luftansaugtemperatur usw.) liegt ein Defekt an der Regelung zu Grunde, wohingegen bei gleichlaufenden, kurzzeitigen Abweichungen ein Gasoder Lastwechsel vorausgegangen sein muss.

Der Abgleich der Mess- und der Sollwerte erfolgt in der Auswerteeinheit 11. Die Motorbetriebsparameter werden aus der Steuereinheit 12 ausgelesen. Der Zeitraum, durch den definiert wird wann es sich um eine kurzfristige Veränderung der Signale aufgrund wechselnder Betriebsbedingungen bzw. um langfristige Veränderungen aufgrund von unerwünschten Veränderungen handelt, kann abhängig von dem Verhalten des Motors bzw. der Lambda-Regelung vorgegeben werden.

Bei der Erfindung werden aus Abgaswerten, die auf vergleichsweise einfache und kostengünstige Art gemessen werden können (Abgastemperaturen, O₂ oder CO₂-Werte und dem Signal eines NOₓ-Sensors) die Ursachen der Emissionsanstiege abgeleitet. Das Verfahren ist flexibel verwendbar. Es kann je nach Bedarf auch ausschließlich zur Emissionskontrolle oder zur Gasbeschaffenheitserkennung genutzt werden. Anstelle von O₂ oder CO₂ -Sonden können beliebige geeignete Sonden zur messtechnischen Erfassung des Gas-Luftverhältnisses im Abgas genutzt werden.

## Patentansprüche

1. Verfahren zum Überwachen der Verbrennung in einer als Ottomotor ausgebildeten Verbrennungseinrichtung für Gas, insbesondere für Erdgas, wobei mittels einer ersten Sonde im Abgas das Gas-Luftverhältnis messtechnisch erfasst und die Messwerte einer Steuereinheit zugeführt werden, welche das Gas-Luftverhältnis in Abhängigkeit von einem Sollwert regelt,
**dadurch gekennzeichnet,**
**dass** die Messwerte der ersten Sonde zusätzlich einer Auswerteeinheit zugeführt werden, dass in der Auswerteeinheit bei einem Wechsel der Gasbeschaffenheit aus der maximalen Änderung der Messwerte vor der Korrektur des Gas-Luftverhältnisses mittels einer gespeicherten Korrelation ein dem Brennwert oder der Wobbezahl analoges zweites Korrektursignal abgeleitet wird und dass das Korrektursignal der Steuereinheit zur Korrektur eines in der Steuereinheit gespeicherten Zündzeitpunkt-Kennfeldes zugeführt wird.

2. Verfahren nach Anspruch 1,
**dadurch gekennzeichnet,**
**dass** die erste Sonde den O₂-Gehalt oder den CO₂-Gehalt im Abgas misst.

3. Verfahren nach Anspruch 1 oder 2,
**dadurch gekennzeichnet,**
**dass** die erste Sonde den CO₂ₘₐₓ-Gehalt im Abgas bei einem Gas-Luftverhältnis λ von im wesentlichen 1 misst und dass in der Auswerteeinheit ein dem Brennwert oder der Wobbezahl analoges Korrektursignal mittels einer zweiten Korrelation erzeugt wird.

4. Verfahren nach einem der Ansprüche 1 bis 3,
**dadurch gekennzeichnet,**
**dass** das Korrektursignal als Vorsteuersignal zur Verstellung des Gas- und/oder Luftvolumenstroms benutzt wird.

5. Verfahren nach einen der Anspruch 1 bis 4,
**dadurch gekennzeichnet, dass** aus der Steuereinheit die Motordrehzahl, Belastung und Verbrennungslufttemperatur ausgelesen und der Auswerteeinheit zur Anpassung des Korrektursignals in Abhängigkeit von unterschiedlichen Betriebs- und Umgebungsbedingungen zugeführt wird.

6. Verfahren nach einem der Ansprüche 1 bis 5,
wobei die Gasverbrennungseinrichtung mit einer Schadstoffminderungsanlage zur Abgasnachbehandlung versehen ist,
**dadurch gekennzeichnet,**
**dass** die Messwerte aus der messtechnischen Erfassung des Gas-Luftverhältnisses in der Auswerteeinheit mit mindestens einem Sollwert verglichen werden und dass ein Warn-oder Fehlersignal herausgegeben oder die Verbrennungseinrichtung abgeschaltet wird, wenn ein Messwert über einen vorgegebenen Betrag und einen vorgegebenen Zeitraum hinaus vom Sollwert abweicht.

7. Verfahren nach Anspruch 6,
**dadurch gekennzeichnet,**
**dass** die Abgastemperaturen stromauf und stromab der Schadstoffminderungsanlage gemessen werden, dass die Messwerte der Auswerteeinheit zugeführt und mit mindestens einem Sollwert verglichen werden und dass ein Warnsignal herausgegeben oder die Gasverbrennungseinrichtung abgeschaltet wird, wenn mindestens ein Messwert über einen vorgegebenen Betrag hinaus vom Sollwert abweicht.

8. Verfahren nach Anspruch 7,
**dadurch gekennzeichnet, dass** die Differenz der beiden Temperaturmesswerte gebildet wird, dass die Differenz mit einem Sollwert verglichen wird und dass ein Warnsignal herausgegeben oder die Gasverbrennungseinrichtung abgeschaltet wird, wenn die Differenz über einen vorgegebenen Betrag hinaus vom Sollwert abweicht oder wenn die Differenz über einen vorgegebenen Zeitraum hinaus kleiner ist als der Sollwert.

9. Verfahren nach Anspruch 7 oder 8,
**dadurch gekennzeichnet, dass** die Differenz der beiden Temperaturmesswerte über einen vorgegebenen Zeitraum unter vorgegebenen Referenzparametem mit Sollwerten verglichen wird.

10. Verfahren nach einem der Ansprüche 6 bis 9,
**dadurch gekennzeichnet, dass** mittels einer zweiten Sonde im Abgas das Gas-Luftverhältnis stromab der Schadstoffminderungsanlage messtechnisch erfasst wird, dass die Messwerte der zweiten Sonde mit den Messwerten der ersten Sonde verglichen werden und dass ein Warnsignal herausgegeben oder die Gasverbrennungseinrichtung abgeschaltet wird, wenn die Differenz der beiden Messwerte einen Sollwert überschreitet.

11. Verfahren nach Anspruch 10,
**dadurch gekennzeichnet,**
**dass** die zweite Sonde den O₂-Gehalt oder den CO₂-Gehalt im Abgas misst.

12. Verfahren nach Anspruch 10 oder 11,
**dadurch gekennzeichnet, dass** Messwerte der Sonden über einen vorgegebenen Zeitraum mit Referenzwerten bei vorgegebenen Betriebsparametern verglichen werden.

13. Verfahren nach einem der Ansprüche 1 bis 12,
**dadurch gekennzeichnet, dass** eine dritte Sonde den NOₓ-Gehalt im Abgas stromab der Schadstoffminderungsanlage misst, dass die Messwerte der Auswerteeinheit zugeführt und mit einem Sollwert verglichen werden und dass ein Warnsignal herausgegeben oder die Gasverbrennungseinrichtung abgeschaltet wird wenn ein Messwert vom Sollwert über einen vorgegebenen Betrag hinaus abweicht.

## Claims

1. A method for monitoring the combustion in a combustion device, designed as an internal combustion engine, for gas, in particular natural gas, the gas/air ratio being measured by means of a first probe in the exhaust gas and the measurements being transmitted to a control unit which regulates the gas/air ratio as a function of a setpoint, **characterised in that** the measurements of the first probe are also transmitted to an evaluation unit, that in said evaluation unit, if the properties of the gas change, a second correction signal analogous to the gross calorific value or the Wobbe index is derived from the maximum change in the measurements prior to the correction of the gas/air ratio by means of a stored correlation, and that the correction signal is transmitted to the control unit to correct an ignition point characteristic diagram stored in the control unit.

2. A method according to claim 1, **characterised in that** the first probe measures the O₂ content or the CO₂ content in the exhaust gas.

3. A method according to claim 1 or 2, **characterised in that** the first probe measures the CO₂ₘₐₓ. content in the exhaust gas with a gas/air ratio λ of mainly 1 and that a correction signal analogous to the gross calorific value or the Wobbe index is generated in the evaluation unit by means of a second correlation.

4. A method according to any one of claims 1 to 3, **characterised in that** the correction signal is used as an input control signal to adjust the gas and/or air volume flow.

5. A method according to any one of claims 1 to 4, **characterised in that** the engine speed, load and combustion air temperature are read out from the control unit and transmitted to the evaluation unit to adjust the correction signal as a function of different operating and ambient conditions.

6. A method according to any one of claims 1 to 5, the gas combustion device being equipped with a pollutant reduction plant for the post-treatment of the exhaust gas, **characterised in that** the values from the measurement of the gas/air ratio are compared in the evaluation unit with at least one setpoint and that a warning or error signal is emitted or the combustion device is switched off if a measurement deviates from the setpoint by a specified amount and for longer than a specified period of time.

7. A method according to claim 6, **characterised in that** the exhaust gas temperatures are measured upstream and downstream of the pollutant reduction plant, that the measurements are transmitted to the evaluation unit and compared with at least one setpoint and that a warning signal is emitted or the gas combustion device is switched off if at least one measurement deviates from the setpoint by a specified amount.

8. A method according to claim 7, **characterised in that** the difference between the two temperature measurements is formed, that said difference is compared with a setpoint and that a warning signal is emitted or the gas combustion device is switched off if the difference deviates from the setpoint by a specified amount or if the difference is smaller than the setpoint for longer than a specified period of time.

9. A method according to claim 7 or 8, **characterised in that** the difference between the temperature measurements is compared with setpoints over a specified period of time under specified reference parameters.

10. A method according to any one of claims 6 to 9, **characterised in that** the gas/air ratio is measured by a second probe in the exhaust gas upstream of the pollutant reduction plant, that the measurements of the second probe are compared with the measurements of the first probe and that a warning signal is emitted or the gas combustion device is switched off if the difference between the two measurements exceeds a setpoint.

11. A method according to claim 10, **characterised in that** the second probe measures the O₂ content or the CO₂ content in the exhaust gas.

12. A method according to claim 10 or 11, **characterised in that** measurements of the probes are compared over a specified period of time with reference values under specified operating parameters.

13. A method according to any one of claims 1 to 12, **characterised in that** a third probe measures the NOₓ content in the exhaust gas downstream of the pollutant reduction plant, that the measurements are transmitted to the evaluation unit and compared with a setpoint and that a warning signal is emitted or the gas combustion device is switched off if a measurement deviates from the setpoint by a specified amount.

## Revendications

1. Procédé pour la surveillance de la combustion dans une installation conçue sous forme de moteur à allumage par étincelle, destinée à la combustion de gaz, en particulier de gaz naturel, où est saisi par mesurage, à l'aide d'un premier capteur, le rapport air/gaz dans les fumées et où sont acheminées les valeurs de mesure à une unité de commande qui règle, en fonction d'une valeur de consigne, le rapport air/gaz,
**caractérisé par le fait**
**que** les valeurs de mesure du premier capteur sont en outre acheminées à une unité d'exploitation de données, que, en cas d'un changement de la qualité de gaz et avant la correction du rapport air/gaz, est déduit dans l'unité d'exploitation de données à partir du changement maximal des valeurs de mesure, à l'aide d'une corrélation mémorisée, un deuxième signal de correction analogue au pouvoir calorifique supérieur ou à l'indice de Wobbe, et que le signal de correction est acheminé à l'unité de commande pour la correction d'un réseau de caractéristiques des moments d'allumage mémorisé dans l'unité de commande.

2. Procédé suivant la revendication 1,
**caractérisé par le fait**
**que** le premier capteur mesure la teneur en O₂ ou la teneur en CO₂ dans les fumées.

3. Procédé suivant l'une des revendications 1 ou 2,
**caractérisé par le fait**
**que** le premier capteur mesure la teneur en CO₂ₘₐₓ dans les fumées pour un rapport air/gaz λ substantiellement 1, et que dans l'unité d'exploitation de données est généré, moyennant une deuxième corrélation, un signal de correction analogue au pouvoir calorifique supérieur ou à l'indice de Wobbe.

4. Procédé suivant l'une des revendications 1 à 3,
**caractérisé par le fait**
**que** le signal de correction est utilisé comme signal de préréglage pour l'ajustage du débit volumique de gaz et/ou du débit volumique de l'air.

5. Procédé suivant l'une des revendications 1 à 4,
**caractérisé par le fait que** sont triés de l'unité de commande le nombre de tours du moteur, la charge et la température de l'air comburant et acheminés à l'unité d'exploitation de données pour l'adaptation du signal de correction en fonction de différentes conditions d'exploitation et environnementales.

6. Procédé suivant l'une des revendications 1 à 5,
où l'installation de combustion de gaz est dotée d'une installation de réduction des matières polluantes pour le post-traitement des fumées,
**caractérisé par le fait**
**que** les valeurs de mesure du rapport gaz/air saisies par mesurage sont comparées, dans l'unité d'exploitation de données, avec au moins une valeur de consigne et qu'un signal d'alarme ou d'erreur est émis ou l'installation de combustion arrêtée, quand une valeur de mesure présente un écart par rapport à la valeur de consigne sur un chiffre et pendant une durée prédéterminés.

7. Procédé suivant la revendication 6,
**caractérisé par le fait**
**que** les températures des fumées sont mesurées en amont et en aval de l'installation de réduction des matières polluantes, que les valeurs de mesure sont acheminées à l'unité d'exploitation de données et comparées avec au moins une valeur de consigne, et qu'un signal d'alarme est émis ou l'installation de combustion arrêtée, quand au moins une valeur de mesure présente un écart par rapport à la valeur de consigne sur un chiffre prédéterminé.

8. Procédé suivant la revendication 7,
**caractérisé par le fait que** la différence des deux valeurs de température est formée, que la différence est comparée avec une valeur de consigne et qu'un signal d'alarme est émis ou l'installation de combustion arrêtée, quand la différence présente un écart par rapport à la valeur de consigne sur un chiffre prédéterminé ou quand la différence est inférieure à la valeur de consigne pendant une période prédéterminée.

9. Procédé suivant l'une des revendications 7 ou 8,
**caractérisé par le fait**
**que** la différence des deux valeurs de température est comparée avec des valeurs de consigne pendant une période prédéterminée sous des paramètres de référence prédéterminés.

10. Procédé suivant l'une des revendications 6 à 9,
**caractérisé par le fait**
**que** le rapport gaz/air dans les fumées est saisi par mesurage, à l'aide d'un deuxième capteur, en aval de l'installation de réduction des matières polluantes, que les valeurs de mesure du deuxième capteur sont comparées avec les valeurs de mesure du premier capteur, et qu'un signal d'alarme est émis ou l'installation de combustion arrêtée, quand la différence des deux valeurs de mesure dépasse une valeur de consigne.

11. Procédé suivant la revendication 10,
**caractérisé par le fait que**
le deuxième capteur mesure la teneur en O₂ ou la teneur en CO₂ dans les fumées.

12. Procédé suivant l'une des revendications 10 ou 11,
**caractérisé par le fait que** des valeurs de mesure des capteurs sont comparées, pendant une période prédéterminée, avec des valeurs de référence à des paramètres d'exploitation prédéterminés.

13. Procédé suivant l'une des revendications 1 à 12,
**caractérisé par le fait qu'**un troisième capteur mesure la teneur en NOₓ dans les fumées en aval de l'installation de réduction des matières polluantes, que les valeurs de mesure sont acheminées à l'unité d'exploitation de données et comparée avec une valeur de consigne, et qu'un signal d'alarme est émis ou l'installation de combustion arrêtée, quand une valeur de mesure présente un écart par rapport à la valeur de consigne sur un chiffre prédéterminé.
